# EUROPÄISCHE PATENTSCHRIFT

(11) **EP 4 330 559 B1**
(45) Veröffentlichungstag und Bekanntmachung des Hinweises auf die Patenterteilung: **24.12.2025**
(21) Anmeldenummer: 22728547.5
(22) Anmeldetag: 10.05.2022
(51) Int. Cl.: F16B 19/02, F16B 41/00

(54) **BEFESTIGUNGSMITTELHALTER, MONTAGESYSTEM UND VERFAHREN ZUM MONTIEREN EINES BEFESTIGUNGSMITTELS**
FASTENING MEANS HOLDER, MOUNTING SYSTEM AND METHOD FOR MOUNTING A FASTENING MEANS
SUPPORT DE MOYEN DE FIXATION, SYSTÈME DE MONTAGE ET PROCÉDÉ DE MONTAGE D'UN MOYEN DE FIXATION

(30) Priorität: 10.05.2021 DE 102021112102
(43) Veröffentlichungstag der Anmeldung: 06.03.2024
(73) Patentinhaber: KAMAX Holding GmbH & Co. KG, 35315 Homberg (Ohm) (DE)
(72) Erfinder: HERBERT, Jan, 35041 Marburg (DE); MOHR, Andreas, 35387 Amöneburg-Mardorf (DE); MERTENS, Frank, 59872 Meschede (DE); NETTEN, Dennis, 57413 Finnentrop (DE)
(74) Vertreter: Müller Schupfner & Partner Patent- und Rechtsanwaltspartnerschaft mbB (Muc)
(86) Internationale Anmeldenummer: PCT/EP2022/062669
(87) Internationale Veröffentlichungsnummer: WO 2022/238422

(56) Entgegenhaltungen:
- EP-A1- 2 480 797
- EP-A1- 3 596 348
- DE-A1- 102019 111 078
- DE-A1- 2 303 051
- JP-A- S59 166 711
- US-A1- 2009 110 478

## Beschreibung

Die Erfindung betrifft ein Montagesystem sowie ein Verfahren zum Montieren eines Befestigungsmittels.

Schrauben und andere Befestigungsmittel, wie z.B. Bolzen, sind bereits aus dem Stand der Technik bekannt. Diese dienen dazu, ein erstes Bauteil mit einem zweiten Bauteil zu verspannen. Hierzu werden die Bolzen in ein Loch in dem ersten Bauteil eingesteckt und dann mit dem Gewinde in dem Bolzen in ein Muttergewinde z.B. in dem zweiten Bauteil verschraubt. Problematisch dabei ist jedoch, dass der Bolzen leicht aus dem Loch des ersten Bauteils herausfällt, wenn der Bolzen nicht gleich mit dem Muttergewinde verschraubt wird. Dies führt insbesondere bei komplexen Fertigungsabläufen dazu, dass Bolzen verloren gehen können, denn der Montageschritt des Verschraubens findet meist nicht direkt nach dem Einführen in dem Loch des ersten Bauteils statt.

Die US 2009/0110478 A1 betrifft eine Montagebaugruppe, welche an eine Grundstruktur an-gebunden werden kann, wobei diese Baugruppe mindestens ein Befestigungselement mit einem Kopf umfasst, wobei der Schaft des Befestigungselements sich durch eine Öffnung erstreckt.

Die DE 10 2019 111 078 A1 betrifft eine Befestigungsanordnung mit Dämpfungswirkung.

Die WO 2011 036126 A1 betrifft einen Toleranzring mit einem metallischen Band.

Die DE 2 303 051 sowie die JP S59 166 711 A betreffen jeweils Lagerhülsen.

Die EP 3 596 348 A1 betrifft eine abnehmbare Hülse (1), die dazu bestimmt ist, auf eine Befestigungsschraube aufgesetzt zu werden.

Die GB 2 344 864 A betrifft ein Blindbefestiger, der durch Zugang zu nur einer Seite eines Werkstücks installiert werden kann.

Ein Montagesystem nach dem Stand der Technik zeigt die WO 2004/102016 A1.

Es ist daher die Aufgabe der Erfindung, eine Möglichkeit bereitzustellen, eine einfache Montage von Befestigungsmitteln zu erlauben, welche darüber hinaus jedoch auch kostengünstig ist.

Diese Aufgabe wird mit einem Montagesystem gemäß Anspruch 1 und durch ein Verfahren zur Montage eines Befestigungsmittels gemäß Anspruch 14 gelöst. Weitere Vorteile, Merkmale und vorteilhafte Ausführungsformen ergeben sich aus den Unteransprüchen, der Beschreibung sowie aus den Figuren.

Erfindungsgemäß ist ein Befestigungsmittelhalter vorgesehen. Der Befestigungsmittelhalter dient dazu, ein Befestigungsmittel in einem Montageloch zu halten bzw. zu platzieren, ohne dass das Befestigungsmittel verschraubt sein muss. In anderen Worten dienen Befestigungsmittelhalter gemäß der Erfindung beispielsweise bzw. vorteilhafterweise nicht dazu, eine Betriebslast zwischen dem Befestigungsmittel und dem bzw. einem Bauteil zu übertragen. Daher dienen Befestigungsmittelhalter vorteilhafterweise nur zur temporären Abstützung des Befestigungsmittels und/oder zur Abstützung des Befestigungsmittels gegenüber dessen Eigengewicht. In anderen Worten ist der Befestigungsmittelhalter somit insbesondere in einer Ausführungsform ein Temporärfixiermittel bzw. ein temporäres Fixier- oder Haltemittel. Das Montageloch des Befestigungsmittelhalters kann beispielsweise ein Langloch, eine Bohrung oder eine andere Ausnehmung oder Durchbruch sein. Zweckmäßigerweise verfügt das Montageloch in seiner Innenwandung über ein Innengewinde und/oder ist bevorzugt vollständig innengewindefrei ausgebildet. Durch den erfindungsgemäßen Befestigungshalter kann in besonders einfacher Weise eine Vorplatzierung eines Befestigungsmittels in einem Montageloch erfolgen, wobei in einem späteren Zeitpunkt das durch den Befestigungsmittelhalter gehaltene Befestigungsmittel endgültig verschraubt werden kann. Der Befestigungsmittelhalter verfügt über einen Grundkörper. Dieser Grundkörper ist dabei insbesondere ein oder der Hauptbestandteil bzw. insbesondere der Zentralbestandteil des Befestigungsmittelhalters. Der Grundkörper erstreckt sich dabei in Längsrichtung. Die Längsrichtung ist dabei zweckmäßigerweise diejenige Richtung, in welche der Grundkörper seine größte Hauptdimension aufweist und/oder in welche sich die Länge des Grundkörpers bestimmt und/oder in welche sich der Aufnahmedurchbruch erstreckt. Der Aufnahmedurchbruch durchdringt den Grundkörper in Längsrichtung vollständig Zweckmäßigerweise erstreckt sich senkrecht zur Längsrichtung eine Radialrichtung und umfänglich um die Längsrichtung eine Umfangsrichtung. In anderen Worten können die Längsrichtung, die Radialrichtung und die Umfangsrichtung ein Zylinderkoordinatensystem miteinander ausbilden, wobei die Längsrichtung die Höhenkoordinate, die Radialrichtung die Radialkoordinate und die Umfangsrichtung die Winkelkoordinate ist. Wie bereits dargelegt, verfügt der Befestigungsmittelhalter über einen Aufnahmedurchbruch, welcher sich vollständig durch den Grundkörper erstreckt. Der Aufnahmedurchbruch dient dazu - in einem Haltezustand - das Befestigungsmittel aufzunehmen und eine Haltekraft auf das Befestigungsmittel auszuüben, um so ein Herausfallen des Befestigungsmittels aus dem Aufnahmedurchbruch zu verhindern. Diese Haltekraftentwicklung wird erfindungsgemäß über eine Presspassung bzw. durch einen Presssitz zwischen dem Befestigungsmittel und dem Aufnahmedurchbruch erreicht.

Der Aufnahmedurchbruch ist im Wesentlichen rotationssymmetrisch um die Längsrichtung ausgebildet und weist daher eine im Wesentlichen rotationssymmetrisch um die Längsrichtung ausgebildete Innenwandung auf. Unter einem "im Wesentlichen rotationssymmetrisch" kann insbesondere verstanden werden, dass der Aufnahmedurchbruch bis auf geringe Fertigungstoleranzen rotationssymmetrisch um die Längsrichtung ausgebildet ist. Alternativ oder zusätzlich bevorzugt kann der Aufnahmedurchbruch auch vollständig rotationssymmetrisch um die Längsrichtung ausgebildet sein. Durch diese im Wesentlichen rotationssymmetrische Ausbildung kann eine besonders kostengünstige Ausgestaltung des Aufnahmedurchbruchs erreicht werden, welche dennoch sicher eine Haltekraft auf ein Befestigungsmittel ausüben kann. Quer zur Längsrichtung ausgebildet verfügt der Befestigungsmittelhalter über zumindest eine Montagestruktur. Die Montagestruktur erstreckt sich daher insbesondere radial von dem Grundkörper weg. Die zumindest eine Montagestruktur, bevorzugt die Vielzahl von Montagestrukturen, dienen dazu, in einem montierten Zustand mit dem Montageloch (bzw. einem Montageloch) derart in Kontakt zu treten, sodass diese, insbesondere durch die vorhandene Reibung, eine Haltekraft in Zusammenspiel mit dem Montageloch ausbilden bzw. bereitstellen. In anderen Worten bilden in einem montierten Zustand die Montagestrukturen mit dem Montageloch eine zumindest kraftschlüssige Halteverbindung aus, um so ein Herausfallen des Befestigungsmittelhalters und des Befestigungsmittels zumindest kraftschlüssig, insbesondere ausschließlich kraftschlüssig oder kraft- und formschlüssig, zu verhindern. Die Montagestrukturen können dabei insbesondere als flächige Strukturen ausgebildet sein, beispielsweise als Ohren, Flaps, Klappen oder als radial umlaufende Flanschelemente oder als ein radial umlaufender Flansch. Unter einer flächigen Struktur kann insbesondere verstanden werden, dass die Haupterstreckungsrichtung des Gegenstands bzw. die Abmessung in diese Richtung insbesondere größer ist als in Längsrichtung. Alternativ kann unter einer flächigen Struktur auch verstanden werden, dass die Abmessungen, welche senkrecht zu der Richtung der Materialstärke stehen, zumindest so groß, bevorzugt doppelt so groß, besonders bevorzugt zumindest dreimal so groß, wie die Materialstärke des flächigen Elements oder Bestandteil sind. Alternativ oder zusätzlich bevorzugt können die Montagestrukturen auch als, vorzugsweise separate, Flanschsegmente ausgebildet sein. Die radial begrenzenden Endbereiche der Montagestrukturen, insbesondere der Flanschsegmente und/oder des Flansches, sind bevorzugt dazu ausgelegt, in einem montierten Zustand mit dem Montageloch zu kontaktieren, in welchem das Befestigungsmittel gehalten werden soll. Durch den erfindungsgemäßen Befestigungsmittelhalter kann eine besonders einfache Montage bzw. Haltekraftbereitstellung für ein Befestigungsmittel erreicht werden, wobei darüber hinaus der Befestigungsmittelhalter durch die im Wesentlichen rotationssymmetrische Ausgestaltung des Aufnahmedurchbruchs um die Längsrichtung bzw. der Innenwandung des Aufnahmedurchbruchs eine besonders kostengünstige Ausgestaltung des Befestigungsmittelhalters resultiert.

Vorteilhafterweise umgibt die Innenwandung die Längsrichtung. In anderen Worten kann die Innenwandung derart ausgebildet sein, dass diese in einer Schnittebene senkrecht zur Längsrichtung eine Kontur ausbildet, welche vollständig geschlossen ist, wobei innerhalb dieser Kontur die Längsrichtung angeordnet ist. Besonders oder alternativ bevorzugt liegt dabei der Mittelpunkt der Innenwandung auf der Längsrichtung. Dies führt zu einer besonders einfachen Fertigung und somit zu einer Kostenreduktion des Befestigungsmittelhalters.

Vorteilhafterweise liegt der Schwerpunkt des Grundkörpers und/oder der Montagestrukturen und/oder des Befestigungsmittelhalters auf der Längsrichtung. Durch die Anordnung des Schwerpunkts des Grundkörpers und/oder der Montagestrukturen oder des Befestigungsmittelhalters auf der Längsrichtung kann eine besonders ausgewogene und einfach zu handhabende Struktur des Befestigungsmittelhalters erreicht werden, sodass hierdurch sowohl die gießtechnische Fertigung als auch eine mögliche Handhabung des Befestigungsmittelhalters erleichtert werden kann.

Vorteilhafterweise weist der Grundkörper eine rotationssymmetrisch um die Längsrichtung ausgebildete Außenwandung, insbesondere eine zylindrische Außenwandung, auf. Hierdurch kann eine besonders einfach herzustellende und besonders mechanisch belastbare Struktur des Grundkörpers erreicht werden. Zweckmäßigerweise kann diese rotationssymmetrisch ausgebildete Außenwandung nur einen Teil des Grundkörpers in Längsrichtung nach außen in die Radialrichtung begrenzen. Alternativ oder zusätzlich bevorzugt kann der Grundkörper vollständig eine rotationssymmetrisch um die Längsrichtung ausgebildete Außenwandung entlang der Längsrichtung aufweisen, wobei diese Rotationssymmetrie nur durch die Montagestruktur bzw. die Anbindungsbereiche der Montagestrukturen zerstört wird. In anderen Worten kann dies bedeuten, dass beispielsweise der Grundkörper außen vollständig rotationssymmetrisch ausgebildet ist bis auf die Bereiche, welche mit den Montagestrukturen verbunden sind.

Vorteilhafterweise weißt die Montagestruktur oder die Montagestrukturen eine Materialstärke - insbesondere betrachtet in Längsrichtung - auf, wobei die Materialstärke geringer als die Länge des Grundkörpers in Richtung der Längsrichtung ist. In anderen Worten kann die Materialdicke der Montagestrukturen, insbesondere aller Montagestrukturen, oder zumindest einer Montagestruktur kleiner sein als die Länge des Grundkörpers, welche dieser in Längsrichtung aufweist. Zweckmäßigerweise ist die Materialstärke dabei die Dicke der Montagestruktur, insbesondere in Längsrichtung. Alternativ oder zusätzlich bevorzugt kann die Materialstärke auch diejenige Abmessung sein, in welche die Montagestruktur ihre kleinste Hauptabmessung aufweist. Durch das Vorsehen einer Materialstärke der Montagestrukturen, welche geringer ist als die Länge des Grundkörpers in Längsrichtung, kann erreicht werden, dass eine besonders kostengünstige Ausbildung des Befestigungsmittelhalters erreicht wird und darüber hinaus kann hierdurch auch ein großes Maß an Flexibilität der Montagestruktur oder der Montagestrukturen erreicht werden, sodass eine besonders einfache Einbringung des Befestigungsmittelhalters in eine Montageöffnung bzw. ein Montageloch erreicht werden kann. Bevorzugt liegt die Materialstärke der Montagestruktur oder der Montagestrukturen, welche auch als Materialdicke bezeichnet werden kann, in einem Bereich von 0,3 bis 8 mm, besonders bevorzugt in einem Bereich von 0,4 bis 2 mm und besonders stark bevorzugt in einem Bereich von 0,7 bis 1,2 mm.

In einer vorteilhaften Ausführungsform liegt das Verhältnis aus der Materialstärke der Montagestruktur zu dem Durchmesser des Aufnahmedurchbruchs in einem Bereich von 0,05 bis 0,3, bevorzugt in einem Bereich von 0,07 bis 0,25 und besonders bevorzugt in einem Bereich von 0,09 bis 0,2. Der Durchmesser des Aufnahmedurchbruchs ist dabei insbesondere der Nenndurchmesser des Aufnahmedurchbruchs und/oder der Durchmesser des kleinsten möglichen Kreises in einer Schnittebene, welcher den Aufnahmedurchbruch gerade umgeben kann, wobei die Schnittebene insbesondere senkrecht zur Längsrichtung steht. Bei einem Verhältnis im Bereich von 0,05 bis 0,3 kann eine besonders gute Haltekraftentwicklung und somit ein besonders hohes Maß an Haltefähigkeit für ein Befestigungsmittel mittels des Befestigungsmittelhalters in einem Montageloch erreicht werden. Sollte das Verhältnis jedoch in einem Bereich von 0,07 bis 0,25 liegen, so hat die Anmelderin überraschend herausgefunden, dass hierdurch eine besonders einfache und kostengünstige Herstellung erreicht werden kann. Um ein besonders hohes Maß an Adaptionsfähigkeit, insbesondere in Hinblick auf einen Winkelausgleich, des Befestigungsmittels zu erreichen, sollte das Verhältnis jedoch in einem Bereich von 0,09 bis 0,2 liegen. Die maßgebliche Materialstärke ist insbesondere die Mittlere Materialstärke der Montagestruktur entlang ihres Verlaufs, vorteilhafterweise geht dabei die Anschlusssektion der Montagestruktur nicht in die Bestimmung der Materialstärke mit ein.

Besonders bevorzugt kann es sein, die Materialstärke kontinuierlich abnehmend in Radialrichtung auszugestalten. Hierdurch kann eine besonders an die mechanische Belastung angepasste Ausgestaltung erreicht werden. Alternativ bevorzugt kann die Materialstärke in Radialrichtung auch konstant sein. Hierdurch kann eine besonders einfache und kostengünstige Fertigung erreicht werden.

Zweckmäßigerweise erstreckt sich zumindest eine Montagestruktur, bevorzugt der überwiegende Teil der Montagestrukturen, und besonders bevorzugt alle Montagestrukturen, im Wesentlichen senkrecht, bevorzugt senkrecht, zu der Längsrichtung. Unter einem im Wesentlichen senkrecht ist dabei zu verstehen, dass der kleinere Winkel zwischen den eingeschlossenen Richtungen 60°, bevorzugt 80°, besonders bevorzugt 85° und besonders stark bevorzugt 88° nicht unterschreiten darf. Durch das Vorsehen von im Wesentlichen senkrecht zu der Längsrichtung erstreckenden Montagestrukturen kann zum einen eine einfache Herstellung und darüber hinaus auch ein hohes Maß an Haltekraft bereitgestellt bzw. erreicht werden. Unter der Erstreckungsrichtung ist insbesondere diejenige Richtung bzw. der Erstreckungsverlauf zu verstehen, welche(r) von dem Anbindungsbereich der Montagestrukturen zu den, insbesondere frei auslaufenden, distalen Enden der Montagestrukturen zeigt bzw. verläuft. In anderen Worten kann die Längsdimension der Montagestruktur sich senkrecht oder zumindest im Wesentlichen senkrecht zu der Längsrichtung erstrecken.

Zweckmäßigerweise bilden die Montagestrukturen den Radialdistalbereich des Befestigungsmittelhalters aus. Unter den Radialdistalbereichen sind dabei diejenigen Bereiche des Befestigungsmittelhalters zu verstehen, welche am weitesten von der Längsrichtung in die Radialrichtung beabstandet sind. In anderen Worten sind die distalen Endbereiche in Radialrichtung des Befestigungsmittelhalters durch die Montagestrukturen ausgebildet. Hierdurch kann eine besonders gute Haltekraftentwicklung und eine besonders einfache Montage des Befestigungshalters sichergestellt bzw. erreicht werden.

Vorteilhafterweise weist die Montagestruktur und/oder die Montagestrukturen eine in eine Radialrichtung berandende Außenfläche auf, wobei die Kontur der Außenfläche in einer Projektionsebene einen Projektionsrundungsradius ausbildet, wobei die Projektionsebene insbesondere durch die Längsrichtung und die Radialrichtung aufgespannt ist. Durch die gerundete Ausgestaltung der radial berandenden Bereiche der Montagestrukturen kann eine besonders gute Montage und Haltekraftentwicklung erreicht werden, denn die Außenfläche, welche mit dem Montageloch kontaktieren soll, ist bereits an die Kontur des Montagelochs "vorangepasst". Zweckmäßigerweise liegt dabei der Mittelpunkt eines, insbesondere aller, Projektionsrundungsradiuses auf der Längsrichtung.

In einer bevorzugten Ausführungsform liegt das Verhältnis des Durchmessers des Aufnahmedurchbruchs zu dem Projektionsrundungsradius in einem Bereich von 0,6 bis 1,8, bevorzugt in einem Bereich von 0,7 bis 1,5 und besonders bevorzugt in einem Bereich von 0,8 bis 1,3. Durch die Ausbildung des Verhältnisses in einem Bereich von 0,6 bis 1,8 kann eine besonders gute Haltekraftentwicklung bereitgestellt werden. Sollte das Verhältnis jedoch in einem Bereich von 0,7 bis 1,5 liegen, kann hierdurch eine besonders einfach herzustellende Variante eines Befestigungsmittelhalters erreicht werden. Sollte jedoch das Verhältnis in einem Bereich von 0,4 bis 1,3 liegen, so kann hierdurch die Montage des Befestigungsmittelhalters vereinfacht werden, denn die Anmelderin hat überraschender Weise herausgefunden, dass hierdurch eine besonders komfortable Montagekraftanforderung an den Benutzer resultiert. In anderen Worten kann hierdurch eine besonders einfach zu montierende Vorrichtung erreicht werden.

Zweckmäßigerweise liegt das Verhältnis des Durchmessers der Außenwandung zu dem Projektionsrundungsradius in einem Bereich von 1,05 bis 3,33, bevorzugt in einem Bereich von 1,25 bis 2,5 und besonders bevorzugt in einem Bereich von 1,5 bis 2,0. Durch die Ausbildung des Verhältnisses in einem Bereich von 1,05 bis 3,33 kann eine besonders gute Haltekraftentwicklung bereitgestellt werden. Sollte das Verhältnis jedoch in einem Bereich von 1,25 bis 2,5 liegen, kann hierdurch eine besonders einfach herzustellende Variante eines Befestigungsmittelhalters erreicht werden. Sollte jedoch das Verhältnis in einem Bereich von 1,5 bis 2,0 liegen, so kann hierdurch die Montage des Befestigungsmittelhalters vereinfacht werden, denn die Anmelderin hat überraschender Weise herausgefunden, dass hierdurch eine besonders komfortable Montagekraftanforderung an den Benutzer resultiert. In anderen Worten kann hierdurch eine besonders einfach zu montierende Vorrichtung erreicht werden.

Bevorzugt weisen die Montagestruktur, bevorzugt die überwiegende Anzahl von Montagestrukturen und besonders bevorzugt alle Montagestrukturen, eine Anschlusssektion auf, wobei die Montagestruktur über die Anschlusssektion mit dem Grundkörper verbunden ist /sind, wobei die Anschlusssektion eine Anschlusskehle, insbesondere eine Anschlusshohlkehle, aufweisen kann, wobei die Anschlusshohlkehle einen Kehlradius aufweist. Die Anschlusssektion kann auch als Anbindungsregion oder -sektion bezeichnet werden. Durch das Vorsehen einer Anschlusssektion an der Montagestruktur kann eine besonders mechanisch belastbare und kompakte Ausgestaltung des Befestigungsmittelhalters erreicht werden. Durch das Vorsehen einer Anschlusshohlkehle in der Anschlusssektion kann ebenfalls die mechanische Belastbarkeit, insbesondere die Dauerfestigkeit, des Befestigungsmittelhalters gesteigert werden. Der Kehlradius der Anschlusshohlkehle der Anschlusssektion bestimmt sich insbesondere in einer Ebene, welche durch die Radialrichtung und die Längsrichtung aufgespannt wird bzw. ist. Durch die Ausbildung der Anschlusssektion als eine Hohlkehle kann darüber hinaus auch der Kerbwirkungsfaktor reduziert werden.

In einer bevorzugten Ausführungsform liegt das Verhältnis des Kehlradius zu dem Durchmesser des Aufnahmedurchbruchs in einem Bereich von 0,05 bis 0,3, bevorzugt in einem Bereich von 0,09 bis 0,25, und besonders bevorzugt in einem Bereich von 0,09 bis 0,2. Sollte das Verhältnis des Kehlradius zu dem Durchmesser in einem Bereich von 0,05 bis 0,3 liegen, so kann eine besonders belastbare und dennoch elastische Anbindung der Montagestruktur an den Grundkörper erreicht werden, sodass hierdurch eine besonders gute Haltekraftentwicklung bzw. eine besonders gute Bereitstellung einer Haltekraft für ein aufzunehmendes Befestigungsmittel in dem Befestigungsmittelhalter erreicht werden kann. Um eine besonders geringe Kerbwirkung und damit ein besonders hohes Maß an Dauerfestigkeit erreichen zu können, sollte das Verhältnis in einem Bereich von 0,09 bis 0,25 liegen. Liegt das Verhältnis jedoch in einem Bereich von 0,09 bis 0,2, so hat die Anmeldering überraschender Weise herausgefunden, dass eine besonders vorteilhafte Fertigungsweise, insbesondere mittels Spritzgießen, erreicht werden kann, sodass hierdurch ein besonders kostengünstiger Befestigungsmittelhalter resultiert.

Vorteilhafterweise weist der Befestigungsmittelhalter zumindest eine Durchlassöffnung, bevorzugt eine Vielzahl von Durchlassöffnungen, auf, wobei zumindest eine der Durchlassöffnungen, bevorzugt alle Durchlassöffnungen, in der Montagestruktur und/oder zwischen Montagestrukturen ausgebildet sind/ist. In anderen Worten können eine oder mehrere Durchlassöffnungen vorgesehen sein, welche sich durch eine Montagestruktur erstrecken oder zwischen den Montagestrukturen ausgebildet sind. Die Durchlassöffnungen dienen dabei dazu, dass Feuchtigkeit durch bzw. an den Montagestrukturen vorbeiführbar ist, um so eine Korrosion zu vermeiden. Die Durchlassöffnungen können dabei derart ausgebildet sein, dass diese die Montagestrukturen, insbesondere in Längsrichtung, vollständig durchdringen. Alternativ oder zusätzlich bevorzugt können die oder einige der Durchlassöffnungen derart ausgebildet sein, dass diese die Montagestrukturen voneinander separieren. Beispielsweise können Durchlassöffnungen derart in die radialen Endbereichen der Montagestrukturen eingebracht sein, sodass aus einer Montagestruktur durch die Durchlassöffnung zwei Montagestrukturen entstehen. Neben dem Effekt der Feuchtigkeitsdurchlässigkeit kann, insbesondere durch radial eingebrachte Durchlassöffnungen, eine Flexibilitätserhöhung der Montagestrukturen durch die Durchlassöffnungen erreicht werden.

Vorteilhafterweise sind die, insbesondere zumindest drei, Durchlassöffnungen in eine Umfangsrichtung äquidistant angeordnet. Unter einem "äquidistant in Umfangsrichtung" angeordnet kann dabei verstanden werden, dass der Winkel zwischen den Durchlassöffnungen in Umfangsrichtung immer der Gleiche ist. Beispielsweise kann daher bei drei Durchlassöffnungen der Winkel zwischen den Durchlassöffnungen immer 120° betragen. Durch die äquidistante Anordnung der Durchlassöffnungen kann eine besonders gute Zentrierwirkung des zu montierenden Befestigungsmittels durch den Befestigungsmittelhalter in dem Montageloch erreicht werden.

**In** einer bevorzugten Ausführungsform separieren die Durchlassöffnungen die Montagestrukturen oder zumindest zwei Montagestrukturen voneinander in Umfangsrichtung. Unter separieren ist dabei zu verstehen, dass durch die Durchlassöffnungen unabhängige Montagestrukturen, insbesondere unterschiedliche Radialdistalbereiche der Montagestrukturen, entstehen. In anderen Worten können in einem Extremum die Durchlassöffnungen derart ausgebildet sein, dass die Montagestrukturen mechanisch vollständig unabhängig voneinander sind. In anderen Worten können die Durchlassöffnungen derart ausgebildet sein, dass die Montagestrukturen in keiner Weise mehr miteinander verbunden sind - außer über eine Verbindung in indirekter Weise über den Grundkörper. Durch dieses Separieren der Montagestrukturen durch die Durchlassöffnungen kann die Flexibilität und die Elastizität der Montagestrukturen gesteigert werden, sodass eine einfachere Montage möglich ist, wobei jedoch gleichzeitig eine hohe Haltekraft bereitgestellt werden kann.

Zweckmäßigerweise sind die Montagestruktur bzw. die Montagestrukturen und/oder der Grundkörper einstückig ausgebildet, wobei vorteilhafterweise der gesamte Befestigungsmittelhalter einstückig ausgebildet sein kann. Durch die einstückige Ausgestaltung kann eine besonders mechanisch belastbare Struktur erreicht werden. Zweckmäßigerweise ist es besonders bevorzugt, wenn der gesamte Befestigungsmittelhalter und/oder die Montagestrukturen zusammen mit dem Grundkörper einstückig ausgebildet sind. Unter einem einstückig ist dabei insbesondere zu verstehen, dass die maßgeblichen Bestandteile bzw. Elemente mittels eines einzigen Urformprozesses hergestellt wurden, bzw. sind.

Vorteilhafterweise sind die Montagestruktur bzw. die Montagestrukturen und/oder der Grundkörper aus einem Polymer, insbesondere aus einem Kautschuk, vorteilhafterweise aus einem Synthesekautschuk und/oder aus einem Metall ausgebildet. Durch das Ausbilden mittels eines Polymers kann eine besonders kostengünstige Variante des Befestigungsmittelhalters erreicht werden. Sollte jedoch ein Kautschuk verwendet werden, so kann eine besonders flexible Anpassungsmöglichkeit des Befestigungsmittelhalters bzw. der Montagestrukturen und/oder des Grundkörpers an das jeweils komplementäre Bauteil, insbesondere an das Montageloch und/oder an das Befestigungsmittel, erreicht werden. Sollten ein Synthesekautschuk verwendet werden, so resultiert hierdurch eine besonders einfache und kostengünstige Fertigung des Befestigungsmittelhalters bzw. des jeweiligen Bauteils, welches aus dem Synthesekautschuk gefertigt ist. Sollte alternativ oder zusätzlich bevorzugt zumindest eines der Bestandteile aus Metall ausgebildet sein, so kann hierdurch die mechanische Festigkeit des Befestigungsmittelhalters gesteigert werden.

In einer vorteilhaften Ausführungsform ist die Montagestruktur bzw. sind die Montagestrukturen und/oder der Grundkörper aus EPDM und/oder ist der Synthesekautschuk ein EPDM. Ein EPDM, welcher auch als Ethylen-Propylen-Dien-Kautschuk bezeichnet werden kann, kann ein hohes Maß an UV-Beständigkeit bereitstellen, sodass die Lagerfähigkeit des Befestigungsmittelhalters durch EPDM gesteigert werden kann. Darüber hinaus kann hierdurch auch noch erreicht werden, dass die Flexibilität des Befestigungsmittelhalters und/oder des Elements, welches aus einem EPDM ist, auch bei Kälte vorhanden ist. Dieser Umstand kann insbesondere in Hinblick auf die Bereitstellung der Haltekraft für das zu haltende Befestigungsmittel im Winter entscheidend sein.

Zweckmäßigerweise weist der Befestigungsmittelhalter in Längsrichtung zumindest zwei, bevorzugt zumindest drei, und besonders bevorzugt eine Vielzahl von, Montagestrukturreihen auf. Hierdurch kann ein besonders hohes Maß an Haltekraft bereitgestellt werden. Unter der Begrifflichkeit Montagestrukturreihe ist insbesondere zu verstehen, dass eine Reihe von Montagestrukturen dann gebildet ist, wenn eine Ebene vorhanden ist, welche senkrecht zur Längsrichtung steht, in welcher mehrere unabhängige und/oder zusammenhängende Montagestrukturen vorhanden sind. Vorteilhafterweise sind mehrere - in Längsrichtung zueinander beabstandete Montagestrukturreihen - vorhanden. Beispielsweise kann daher eine derartige Montagestrukturreihe dadurch gebildet sein, dass in einer Ebene drei radial nach außen weisende Montagestrukturen, insbesondere in Form von Klappen, vorgesehen sind. Vorteilhafterweise kann in Längsrichtung beabstandet zu dieser ersten Montagestrukturreihe eine in gleicher oder ähnlicher Weise ausgebildete zweite Montagestrukturreihe vorhanden sein, um die bereitstellbare Haltekraft zu erhöhen. Alternativ oder zusätzlich bevorzugt können die hierdurch entstehenden Vorteile auch dadurch erreicht werden, dass in einem montierten Zustand auf das Befestigungsmittel mehrere Befestigungsmittelhalter in Längsrichtung aneinandergereiht angeordnet sind. Der Vorteil von zwei oder mehreren Befestigungsmittelhaltern im Vergleich zu nur einem Befestigungsmittelhalter mit zwei oder mehreren Montagestrukturreihen ist, dass diese leicht zwangsentformt werden können, sodass eine kostengünstigere und einfachere Fertigung resultiert.

Das Befestigungsmittel weist ein Außengewinde auf, wobei das Außengewinde einen Durchmesser aufweist, wobei das Außengewinde insbesondere ein metrisches oder ein zölliges Gewinde ist, und/oder wobei zweckmäßigerweise das Verhältnis des Durchmessers des Aufnahmedurchbruchs zu dem Gewindedurchmesser in einem Bereich von 0,7 bis 0,95, bevorzugt in einem Bereich von 0,75 bis 0,92 und besonders bevorzugt in einem Bereich von 0,8 bis 0,9 liegen kann. In anderen Worten kann das Befestigungsmittel ein Außengewinde aufweisen, wobei dieses Außengewinde einen Nenndurchmesser aufweist. Um eine besonders vielfältige und kostengünstige Einsatzfähigkeit des Montagesystems zu erreichen, sollte das Außengewinde ein metrisches oder ein zölliges Gewinde sein. Sollte das Verhältnis des Durchmessers des Aufnahmedurchbruchs zu dem Gewindedurchmesser des Außengewindes in einem Bereich von 0,7-0,95 liegen, so kann hierdurch eine besonders einfache Montage des Befestigungsmittels in dem Befestigungsmittelhalter erreicht werden. Sollte das Verhältnis jedoch in einem Beriech von 0,75 - 0,92 liegen, so kann hierdurch ein besonders hohes Maß an Haltekraft zwischen dem Befestigungsmittelhalter und dem Befestigungsmittel erreicht werden.

In einer vorteilhaften Ausführungsform umfasst das Montagesystem zwei, bevorzugt drei oder eine Vielzahl, Befestigungsmittelhalter wie vorgehend und nachfolgend beschrieben. Hierdurch kann in effektiver und einfacher Weise die durch das Montagesystem für das Befestigungsmittel bereitgestellte Haltekraft weiter gesteigert werden. Vorteilhafterweise können die Befestigungsmittelhalter dabei derart angeordnet sein, dass diese in einem montierten Zustand miteinander kontaktierend sind. Hierdurch kann die Kompaktheit des Montagesystems erhöht werden.

Ein weiterer Aspekt der Erfindung betrifft ein Verfahren zur Montage eines Befestigungsmittels mit den Merkmalen von Anspruch 14.

Durch ein derartiges Verfahren können insbesondere die vorgehend und nachfolgend beschriebenen Vorteile erreicht werden. Zweckmäßigerweise kann ein derartiges Verfahren zur Montage eines Befestigungsmittels den weiteren Verfahrensschritt des Einführens des Befestigungsmittelhalters in eine Montageöffnung bzw. ein Montageloch, insbesondere eines zu verspannenden Bauteils, umfassen. Das Verfahren kann dabei auch die vorhergehenden und nachfolgend beschriebenen Merkmale der Vorrichtungen in zumindest äquivalenter Weise aufweisen.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
- Figur 1: eine isometrische Ansicht eines Befestigungsmittelhalters;
- Figur 2: eine Betrachtung in Längsrichtung eines Befestigungsmittelhalters;
- Figur 3: eine Seitenansicht bzw. eine Schnittansicht eines Befestigungsmittelhalters;
- Figur 4: eine Seitenansicht bzw. eine Schnittansicht eines weiteren Befestigungsmittelhalters; und
- Figur 5: ein Montagesystem.

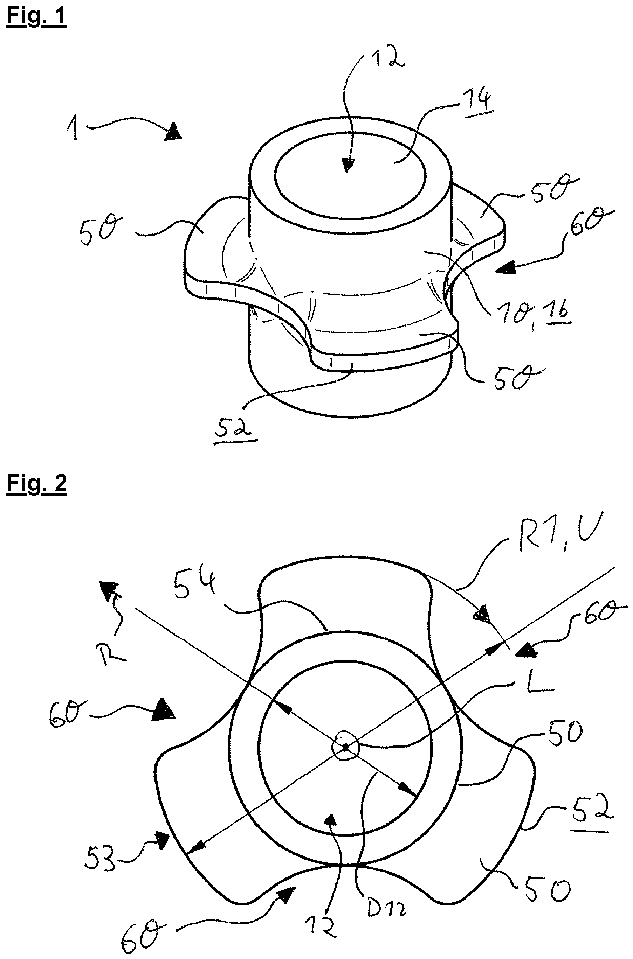

In der **Figur 1** ist ein Befestigungsmittelhalter 1 gezeigt. Der Befestigungsmittelhalter 1 umfasst einen Grundkörper 10 sowie drei Montagestrukturen 50, welche sich quer zur Längsrichtung L erstrecken. Der Grundkörper 10 weist eine zylindrische Außenwandung 16 auf, sowie einen Aufnahmedurchbruch 12, welcher eine symmetrisch um die Längsrichtung L ausgebildete Innenwandung 14 aufweist. Die Montagestrukturen 50 sind voneinander in Umfangsrichtung U durch die Durchlassöffnungen 60 voneinander separiert. Die Montagestrukturen 50 weisen jeweils eine in eine Radialrichtung R berandende Außenfläche 52 auf.

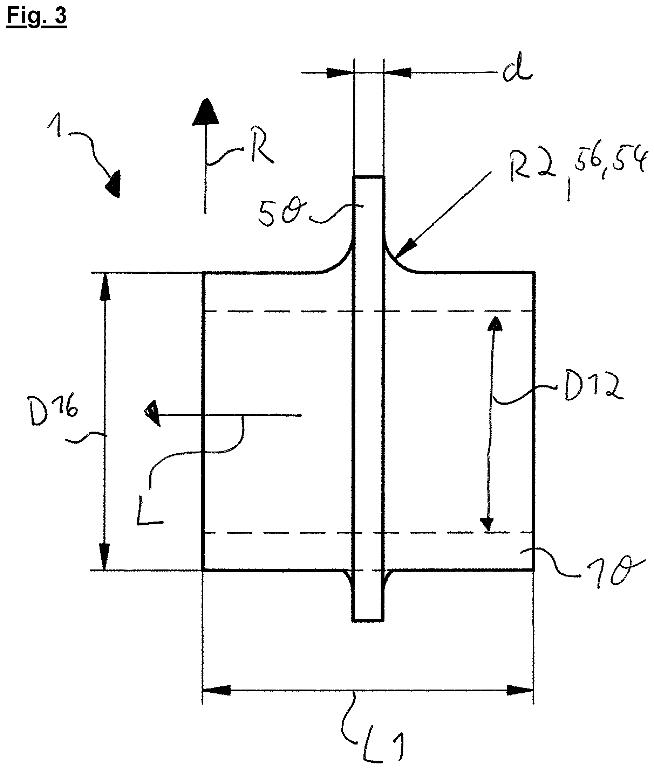

In der **Figur 2** ist eine Ansicht eines Befestigungsmittelhalters 1 gezeigt, wobei die Blickrichtung in der Figur 2 entgegen der Längsrichtung L gerichtet ist. Radial von der Längsrichtung L wegerstreckend befindet sich die Radialrichtung R. Umfänglich um die Längsrichtung L ist die Umfangsrichtung U ausgebildet. Prinzipiell kann die in der Figur 2 dargestellte Ausführungsform zu der Figur 1 und/oder zu der in der Figur 3 dargestellten Ausführungsform passend sein. Die drei Montagestrukturen 50 des Befestigungsmittelhalters 1 erstrecken sich dabei in Radialrichtung R und sind jeweils über eine Anschlusssektion 54 mit dem Grundkörper 10 verbunden. Die Montagestrukturen 50 weisen eine in Radialrichtung R berandende Außenfläche 52 auf, wobei die Kontur der Außenfläche 52 in der in der Figur 2 dargestellten Projektionsebene ein Projektionsrundungsradius R1 ausbilden. Die Außenfläche 52 bildet dabei jeweils einen Teil der Radialdistalbereiche 53 der Montagestrukturen 50 aus. Zwischen den Montagestrukturen 50 befindet sich jeweils eine Durchlassöffnung 60, welche radial von außen eingebracht ist und sich in Längsrichtung L erstreckt. Zentral im Grundkörper 10 befindlich ist der Aufnahmedurchbruch 12, wobei der Mittelpunkt des Aufnahmedurchbruchs 12 auf der Längsrichtung L liegend.

In der **Figur 3** ist eine Seitenansicht eines Befestigungsmittelhalters 1 gezeigt. In der Figur 3 ist dabei der Außendurchmesser D16 der Außenwandung 16 des Grundkörpers 10 erkennbar. Wie der Figur 3 zu entnehmen ist, steht dabei die Längsrichtung L senkrecht auf der Radialrichtung R. Die in der Figur 3 gezeigten Montagestrukturen 50 weisen eine Materialstärke d auf und die als Anschlusshohlkehle ausgebildete Anschlusssektion 54 weist einen Kehlradius R2 auf. Der Befestigungsmittelhalter 1 verfügt über eine Länge L1 des Grundkörpers 10 in Längsrichtung L.

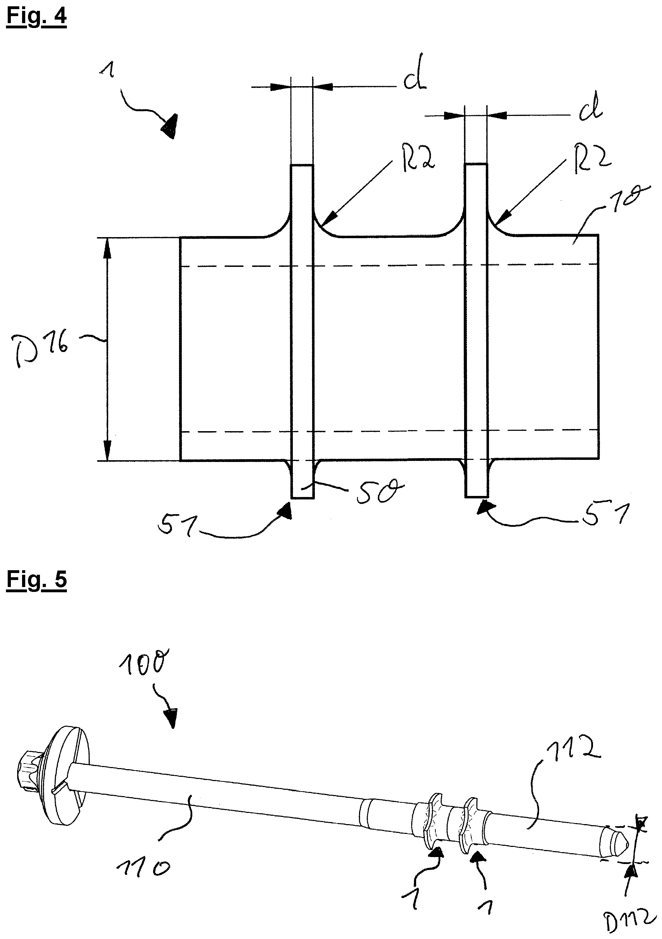

In der **Figur 4** ist eine alternative Ausgestaltung eines Befestigungsmittelhalters 1 gezeigt, wobei sich die in der Figur 4 dargestellte Ausführungsform vornehmlich dadurch von der in Figur 3 dargestellten Ausführungsform unterscheidet, dass in der Figur 4 mehrere Montagestrukturreihen 51 vorhanden sind.

In der **Figur 5** ist ein erfindungsgemäßes Montagesystem 100 gezeigt, welches ein Befestigungsmittel 110 und zwei Befestigungsmittelhalter 1 umfasst. Das Befestigungsmittel 110 ist in der dargestellten Ausführungsvariante eine Schraube, insbesondere eine hochfeste Schraube. Das Befestigungsmittel 110 weist ein Außengewinde 112 auf, welches einen Gewindedurchmesser D112 aufweist. Die beiden Befestigungsmittelhalter 1 sind auf dem Außengewinde 112 des Befestigungsmittels 110 aufgebracht. Die axialen Deckflächen der jeweiligen Grundkörper 10 der Befestigungsmittelhalter 1 kontaktieren dabei miteinander, sodass die Befestigungsmittelhalter 1 unmittelbar benachbart zueinander auf dem Außengewinde 112 des Befestigungsmittels 110 angeordnet sind.

### Bezugszeichenliste:

- 1: - Befestigungsmittelhalter
- 10: - Grundkörper
- 12: - Aufnahmedurchbruch
- 14: - Innenwandung
- 16: - Außenwandung
- 50: - Montagestruktur
- 51: - Montagestrukturreihen
- 52: - Außenfläche
- 53: - Radialdistalbereiche
- 54: - Anschlusssektion
- 56: - Anschlusshohlkehle
- 60: - Durchlassöffnung
- 100: - Montagesystem
- 110: - Befestigungsmittel
- 112: - Außengewinde
- d: - Materialstärke
- D12: - Durchmesser des Aufnahmedurchbruchs 12
- D16: - Durchmessers der Außenwandung 16
- L: - Längsrichtung
- L1: - Länge des Grundkörpers
- R: - Radialrichtung
- R1: - Projektionsrundungsradius
- R2: - Kehlradius
- U: - Umfangsrichtung

## Patentansprüche

1. Montagesystem (100) umfassend ein Befestigungsmittel (110) und zumindest einen Befestigungsmittelhalter (1),
wobei der Befestigungsmittelhalter (1) einen Grundkörper (10) und zumindest eine Montagestruktur (50) umfasst,
wobei der Grundkörper (10) sich in eine Längsrichtung (L) erstreckt,
wobei der Grundkörper (10) einen Aufnahmedurchbruch (12) aufweist,
wobei der Aufnahmedurchbruch (12) sich vollständig durch den Grundkörper (10) erstreckt,
wobei der Aufnahmedurchbruch (12) eine im Wesentlichen rotationssymmetrisch um die Längsrichtung (L) ausgebildete Innenwandung (14) aufweist,
wobei die Montagestruktur (50) sich quer zur Längsrichtung (L) erstreckt,
wobei eine Presspassung zwischen dem Befestigungsmittel (110) und dem Aufnahmedurchbruch (12) vorliegt,
**dadurch gekennzeichnet, dass** das Befestigungsmittel (110) entweder eine Schraube oder ein Bolzen ist, der ein Außengewinde aufweist.

2. Montagesystem (100) gemäß einem der vorhergehenden Ansprüche,
wobei die Montagestruktur (50) eine Materialstärke (d) aufweist,
wobei die Materialstärke (d) geringer ist als die Länge des Grundkörpers (L1) in Richtung der Längsrichtung (L).

3. Montagesystem (100) gemäß einem der vorhergehenden Ansprüche, wobei das Verhältnis aus der Materialstärke (d) der Montagestruktur (50) zu dem Durchmesser (D12) des Aufnahmedurchbruchs (12) in einem Bereich von 0,05 bis 0,3, bevorzugt in einem Bereich von 0,07 bis 0,25, und besonders bevorzugt in einem Bereich von 0,09 bis 0,2, liegt.

4. Montagesystem (100) gemäß einem der vorhergehenden Ansprüche, wobei zumindest eine Montagestruktur (50), bevorzugt der überwiegende Teil der Montagestrukturen (50), und besonders bevorzugt alle Montagestrukturen (50), sich im Wesentlichen senkrecht zu der Längsrichtung (L) erstrecken.

5. Montagesystem (100) gemäß einem der vorhergehenden Ansprüche, wobei die Montagestrukturen (50) die Radialdistalbereiche (53) des Befestigungsmittelhalters (1) ausbilden.

6. Montagesystem (100) gemäß einem der vorhergehenden Ansprüche,
wobei die Montagestrukturen (50) eine in eine Radialrichtung (R) berandende Außenfläche (52) aufweisen,
wobei die Kontur der Außenfläche (52) in einer Projektionsebene einen Projektionsrundungsradius (R1) ausbildet,
wobei die Projektionsebene insbesondere durch die Längsrichtung (L) und die Radialrichtung (R) aufgespannt ist.

7. Montagesystem (100) gemäß einem der vorhergehenden Ansprüche, wobei das Verhältnis des Durchmessers (D12) des Aufnahmedurchbruchs (12) zu einem und/oder dem Projektionsrundungsradius (R1) in einem Bereich von 0,6 bis 1,8, bevorzugt in einem Bereich von 0,7 bis 1,5, und besonders bevorzugt in einem Bereich von 0,8 bis 1,3, liegt.

8. Montagesystem (100) gemäß einem der vorhergehenden Ansprüche,
wobei die Montagestruktur (50), bevorzugt die überwiegende Anzahl an Montagestrukturen (50), und besonders bevorzugt alle Montagestrukturen (50), eine Anschlusssektion (54) aufweisen,
wobei die Montagestruktur (50) über die Anschlusssektion (54) mit dem Grundkörper (10) verbunden ist/sind,
wobei die Anschlusssektion (54) eine Anschlusskehle, insbesondere eine Anschlusshohlkehle (56), aufweist,
wobei die Anschlusskehle, insbesondere die Anschlusshohlkehle (56), einen Kehlradius (R2) aufweist.

9. Montagesystem (100) gemäß einem der vorhergehenden Ansprüche,
wobei der Befestigungsmittelhalter (1) zumindest eine, bevorzugt eine Vielzahl von, Durchlassöffnung bzw. Durchlassöffnungen (60) aufweist,
wobei zumindest ein Durchlassöffnung (60), bevorzugt alle Durchlassöffnungen (60), in der Montagestruktur(en) (50) oder zwischen Montagestrukturen (50) ausgebildet sind.

10. Montagesystem (100) gemäß einem der vorhergehenden Ansprüche, wobei die Durchlassöffnungen (60) die Montagestrukturen (50) voneinander in Umfangsrichtung (U) separieren.

11. Montagesystem (100) gemäß einem der vorhergehenden Ansprüche,
wobei die Montagestruktur (50) und/oder die Montagestrukturen (50)
und/oder der Grundkörper (10) einstückig ausgebildet sind, wobei vorteilhafterweise der gesamte Befestigungsmittelhalter (1) einstückig ausgebildet ist.

12. Montagesystem (100) gemäß einem der vorhergehenden Ansprüche, wobei die Montagestruktur (50) und/oder die Montagestrukturen (50) und/oder der Grundkörper (10) aus einem Polymer, insbesondere aus einem Kautschuk, vorteilhafterweise aus einem Synthesekautschuk und/oder aus einem Metall ausgebildet ist/sind.

13. Montagesystem (100) gemäß einem der vorhergehenden Ansprüche, wobei der Befestigungsmittelhalter (1) in Längsrichtung (L) zumindest zwei, bevorzugt zumindest drei, und besonders bevorzugt eine Vielzahl von, Montagestrukturreihen (51) aufweist.

14. Verfahren zur Montage eines Befestigungsmittels (110) umfassend die Schritte:
- Bereitstellen eines Befestigungsmittels (110), wobei das Befestigungsmittel (110) eine Schraube oder ein Bolzen, der ein Außengewinde aufweist, ist;
- Bereitstellen eines Befestigungsmittelhalters (1),
wobei der Befestigungsmittelhalter (1) einen Grundkörper (10) und zumindest eine Montagestruktur (50) umfasst,
wobei der Grundkörper (10) sich in eine Längsrichtung (L) erstreckt,
wobei der Grundkörper (10) einen Aufnahmedurchbruch (12) aufweist,
wobei der Aufnahmedurchbruch (12) sich vollständig durch den Grundkörper (10) erstreckt,
wobei der Aufnahmedurchbruch (12) eine im Wesentlichen rotationssymmetrisch um die Längsrichtung (L) ausgebildete Innenwandung (14) aufweist,
wobei die Montagestruktur (50) sich quer zur Längsrichtung (L) erstreckt; und
- Einführen des Befestigungsmittels (110) in den Aufnahmedurchbruch (12) des Befestigungsmittelhalters (1), sodass eine Presspassung zwischen Befestigungsmittel (110) und Aufnahmedurchbruch (12) erreicht wird.

## Claims

1. Mounting system (100) comprising a fastener (110) and at least one fastener holder (1),
wherein the fastener holder (1) comprises a base body (10) and at least one assembly structure (50),
wherein the base body (10) extends in a longitudinal direction (L),
wherein the base body (10) has a reception breakthrough (12),
wherein the reception breakthrough (12) extends completely through the base body (10),
wherein the reception breakthrough (12) has an inner wall (14) formed substantially rotationally symmetrically about the longitudinal direction (L),
wherein the assembly structure (50) extends transversely to the longitudinal direction (L)
wherein there is an interference fit between the fastener (110) and the reception breakthrough (12),
**characterized in that** the fastener (110) is either a screw or a bolt that has an external thread.

2. Mounting system (100) according to any of the preceding claims,
wherein the assembly structure (50) has a material strength (d),
wherein the material strength (d) is less than the length of the base body (L1) in the direction of the longitudinal direction (L).

3. Mounting system (100) according to any of the preceding claims,
wherein the ratio of the material strength (d) of the assembly structure (50) to the diameter (D12) of the reception breakthrough (12) is in a range from 0.05 to 0.3, preferably in a range from 0.07 to 0.25, and particularly preferably in a range from 0.09 to 0.2

4. Mounting system (100) according to any of the preceding claims,
wherein at least one assembly structure (50), preferably the predominant part of the assembly structures (50), and particularly preferably all assembly structures (50), extend substantially perpendicular to the longitudinal direction (L).

5. Mounting system (100) according to any of the preceding claims,
wherein the assembly structures (50) form the radial distal regions (53) of the fastener holder (1).

6. Mounting system (100) according to any of the preceding claims,
wherein the assembly structures (50) have an outer surface (52) bordering in a radial direction (R),
wherein the contour of the outer surface (52) forms a projection rounding radius (R1) in a projection plane,
wherein the projection plane is spanned in particular by the longitudinal direction (L) and the radial direction (R).

7. Mounting system (1) according to any of the preceding claims,
wherein the ratio of the diameter (D12) of the reception breakthrough (12) to one and/or the projection rounding radius (R1) is in a range from 0.6 to 1.8, preferably in a range from 0.7 to 1.5, and particularly preferably in a range from 0.8 to 1.3.

8. Mounting system (100) according to any of the preceding claims,
wherein the assembly structure (50), preferably the predominant number of assembly structures (50), and particularly preferably all assembly structures (50), comprise a connection section (54),
wherein the assembly structure (50) is/are connected to the base body (10) via the connection section (54),
wherein the connection section (54) has a connection fillet, in particular a connection hollow (56),
wherein the connecting fillet, in particular the connecting hollow (56), has a fillet radius (R2).

9. Mounting system (100) according to any of the preceding claims,
wherein the fastener holder (1) comprises at least one, preferably a plurality of, passage opening or passage openings (60),
wherein at least one passage opening (60), preferably all passage openings (60), are formed in the assembly structure(s) (50) or between assembly structures (50).

10. Mounting system (100) according to any of the preceding claims,
wherein the passage openings (60) separate the assembly structures (50) from each other in the circumferential direction (U).

11. Mounting system (100) according to any of the preceding claims,
wherein the assembly structure (50) and/or the assembly structures (50) and/or the base body (10) are formed in one piece, wherein advantageously the entire fastener holder (1) is formed in one piece.

12. Mounting system (100) according to any of the preceding claims,
wherein the assembly structure (50) and/or the assembly structures (50) and/or the base body (10) is/are formed from a polymer, in particular from a rubber, advantageously from a synthetic rubber and/or from a metal.

13. Mounting system (1) according to any of the preceding claims,
wherein the fastener holder (1) comprises in longitudinal direction (L) at least two, preferably at least three, and particularly preferably a plurality of, assembly structure rows (51).

14. Method of assembling a fastener (110) comprising the steps of:
- providing a fastener (110), wherein the fastener (110) is a screw or a bolt that has an external thread;
- providing a fastener holder (1),
wherein the fastener holder (1) comprises a base body (10) and at least one assembly structure (50),
wherein the base body (10) extends in a longitudinal direction (L),
wherein the base body (10) has a reception breakthrough (12),
wherein the reception breakthrough (12) extends completely through the base body (10),
wherein the reception breakthrough (12) has an inner wall (14) formed substantially rotationally symmetrically about the longitudinal direction (L),
wherein the assembly structure (50) extends transversely to the longitudinal direction (L); and
- inserting the fastener (110) into the reception breakthrough (12) of the fastener holder (1) so that an interference fit is achieved between the fastener (110) and the reception breakthrough (12).

## Revendications

1. Système de montage (100) comprenant un moyen de fixation (110) et au moins un support de moyen de fixation (1), dans lequel
le support de moyen de fixation (1) comprend un corps de base (10) et au moins une structure de montage (50),
le corps de base (10) s'étend dans une direction longitudinale (L),
le corps de base (10) présente un ajour de réception (12),
l'ajour de réception (12) s'étend complètement à travers le corps de base (10),
l'ajour de réception (12) présente une paroi intérieure (14) formée sensiblement à symétrie de révolution autour de la direction longitudinale (L),
la structure de montage (50) s'étend transversalement à la direction longitudinale (L),
un ajustement serré se présente entre le moyen de fixation (110) et l'ajour de réception (12),
**caractérisé en ce que** le moyen de fixation (110) est soit une vis, soit un boulon, qui présente un filetage.

2. Système de montage (100) selon l'une des revendications précédentes,
dans lequel la structure de montage (50) présente une épaisseur de matériau (d), l'épaisseur de matériau (d) étant inférieure à la longueur du corps de base (L1) dans la direction longitudinale (L).

3. Système de montage (100) selon l'une des revendications précédentes,
dans lequel le rapport de l'épaisseur de matériau (d) de la structure de montage (50) sur le diamètre (D12) de l'ajour de réception (12) est compris dans une plage de 0,05 à 0,3, de préférence dans une plage de 0,07 à 0,25, et de manière particulièrement préférée dans une plage de 0,09 à 0,2.

4. Système de montage (100) selon l'une des revendications précédentes,
dans lequel au moins une structure de montage (50), de préférence la majeure partie des structures de montage (50), et de manière particulièrement préférée toutes les structures de montage (50), s'étendent sensiblement perpendiculairement à la direction longitudinale (L).

5. Système de montage (100) selon l'une des revendications précédentes,
dans lequel les structures de montage (50) forment les zones radiales distales (53) du support de moyen de fixation (1).

6. Système de montage (100) selon l'une des revendications précédentes,
dans lequel les structures de montage (50) présentent une surface extérieure (52) de délimitation dans une direction radiale (R),
le contour de la surface extérieure (52) forme, dans un plan de projection, un rayon de courbure de projection (R1),
en particulier, le plan de projection est défini par la direction longitudinale (L) et par la direction radiale (R).

7. Système de montage (100) selon l'une des revendications précédentes,
dans lequel le rapport du diamètre (D12) de l'ajour de réception (12) sur un et/ou le rayon de courbure de projection (R1) est compris dans une plage de 0,6 à 1,8, de préférence dans une plage de 0,7 à 1,5, et de manière particulièrement préférée dans une plage de 0,8 à 1,3.

8. Système de montage (100) selon l'une des revendications précédentes,
dans lequel la structure de montage (50), de préférence la majorité des structures de montage (50), et de manière particulièrement préférée toutes les structures de montage (50), présente(nt) une section de raccordement (54),
la/les structure(s) de montage (50) est/sont reliée(s) au corps de base (10) par l'intermédiaire de la section de raccordement (54),
la section de raccordement (54) présente une gorge de raccordement, en particulier une gorge creuse de raccordement (56),
la gorge de raccordement, en particulier la gorge creuse de raccordement (56), présente un rayon de gorge (R2).

9. Système de montage (100) selon l'une des revendications précédentes,
dans lequel le support de moyen de fixation (1) présente au moins une ouverture de passage, de préférence une pluralité d'ouvertures de passage (60),
au moins une ouverture de passage (60), de préférence toutes les ouvertures de passage (60), sont formées dans la/les structure(s) de montage (50) ou entre des structures de montage (50).

10. Système de montage (100) selon l'une des revendications précédentes,
dans lequel les ouvertures de passage (60) séparent les structures de montage (50) les unes des autres dans la direction circonférentielle (U).

11. Système de montage (100) selon l'une des revendications précédentes,
dans lequel la structure de montage (50) et/ou les structures de montage (50) et/ou le corps de base (10) sont formés d'un seul tenant, avantageusement, l'ensemble du support de moyen de fixation (1) est formé d'un seul tenant.

12. Système de montage (100) selon l'une des revendications précédentes,
dans lequel la structure de montage (50) et/ou les structures de montage (50) et/ou le corps de base (10) est/sont réalisé(e)(s) en polymère, en particulier en caoutchouc, avantageusement en caoutchouc synthétique et/ou en métal.

13. Système de montage (100) selon l'une des revendications précédentes,
dans lequel le support de moyen de fixation (1) comporte, dans la direction longitudinale (L), au moins deux, de préférence au moins trois, et de manière particulièrement préférée une pluralité de rangées de structures de montage (51).

14. Procédé de montage d'un moyen de fixation (110) comprenant les étapes consistant à :
- fournir un moyen de fixation (110), le moyen de fixation (110) étant une vis ou un boulon, qui présente un filetage ;
- fournir un support de moyen de fixation (1),
sachant que
le support de moyen de fixation (1) comprend un corps de base (10) et au moins une structure de montage (50),
le corps de base (10) s'étend dans une direction longitudinale (L),
le corps de base (10) présente un ajour de réception (12),
l'ajour de réception (12) s'étend complètement à travers le corps de base (10),
l'ajour de réception (12) présente une paroi intérieure (14) formée sensiblement à symétrie de révolution autour de la direction longitudinale (L),
la structure de montage (50) s'étend transversalement à la direction longitudinale (L),
et
- insérer le moyen de fixation (110) dans l'ajour de réception (12) du support de moyen de fixation (1) de manière à obtenir un ajustement serré entre le moyen de fixation (110) et l'ajour de réception (12).
